# EUROPÄISCHE PATENTANMELDUNG

(11) **EP 1 262 213 A1**
(43) Veröffentlichungstag der Anmeldung: **04.12.2002**
(21) Anmeldenummer: 01112583.8
(22) Anmeldetag: 23.05.2001
(51) Int. Cl.: A63F 13/02, G06F 3/00

(54) **Verfahren zur Ortung eines Gegenstandes, einer Person und/oder eines Teiles davon**

(71) Anmelder: SIEMENS AKTIENGESELLSCHAFT, 80333 München (DE)
(72) Erfinder: Bock, Gerhard, 82152 Krailling (DE); Kujawski, Clemens, 81545 München (DE); Musto, Alexandra, Dr., 81377 München (DE); Stein, Klaus, 83661 Lenggries (DE)

(57) **Zusammenfassung**

Verfahren, Anwendung des Verfahrens, Vorrichtung zum Visualisieren und Spielkonsole zur Umsetzung von Rollenspielen in einer realen Umgebung mittels augmented oder virtual reality.

## Beschreibung

Die vorliegende Beschreibung betrifft allgemein ein Verfahren zur Ortung eines Gegenstandes, einer Person und/oder eines Teiles davon durch einen Benutzer, die Anwendung solch eines Verfahrens, eine Vorrichtung als Benutzerschnittstelle zum Ausführen des Verfahrens oder in der Anwendung des Verfahrens sowie eine Spielkonsole, welche beispielhaft das Verfahren oder dessen Anwendung unterstützen kann.

Es sind bereits Verfahren zur Ortung und Positionsbestimmung von Gegenständen, Personen und/oder Teilen davon in der realen Umwelt bekannt. Beispielhaft ist es möglich, mittels eines Peilsenders die Koordinaten desselben oder eine Person, die diesen trägt, zu ermitteln. Es sind auch Verfahren bekannt, die auf einer Satellitenpeilung basieren, diese Systeme werden üblicherweise als GPS-Systeme (global positioning systems) bezeichnet und kommen zum Beispiel in Navigationssystemen oder auch zur Ortung von gestohlenen Fahrzeugen zum Einsatz. Bei sämtlichen dieser bekannten Verfahren und Vorrichtungen wird dem Benutzer die Position in den real existierenden Umgebungskoordinaten dargestellt. Lediglich bei den neuesten Navigationssystemen kann eine Relativbewegung des Benutzers bzw. des Fahrzeuges berücksichtigt werden, so dass die Karte in dem Navigationssystem entsprechend der Fortbewegungsrichtung ausgerichtet werden kann.

Ferner sind verschiedene sogenannte virtual reality-Anwendungen, wie zum Beispiel Spiele, bekannt. Hierbei wird versucht, möglichst dreidimensional dem Spieler eine sichtbare Umgebung vorzutäuschen, die lediglich in einem Rechner vorliegt und von dem Programm simuliert wird. Im Regelfall betrachtet der Spieler die virtuelle Umgebung über einen Bildschirm, der gegebenenfalls in einem sogenannten virtual reality-Helm integriert sein kann. Somit besteht eine vollständige Entkopplung zu der realen Welt, und eine Interaktion zwischen mehreren Mitspielern oder die Implementierung der Umgebung sind somit nicht möglich.

Schließlich ist die Technik der sogenannten augmented reality bekannt, mittels welcher einem Benutzer Zusatzinformationen zu seiner Umgebung bereitgestellt werden sollen; technisch realisierbare Anwendungen sind bis dato jedoch kaum bekannt.

Aufgabe der vorliegenden Erfindung ist es, die Möglichkeit bereitzustellen, in einem spielerischen Umfeld die reale Umgebung und/oder Mitspieler zu integrieren.

Erfindungsgemäß wird diese Aufgabe gelöst durch ein Verfahren zur Ortung eines Gegenstandes, einer Person und/oder eines Teiles davon durch einen Benutzer mit den Merkmalen des Anspruches 1, eine Anwendung des Verfahrens, eine Vorrichtung zur Visualisierung gemäß Anspruch 7 sowie eine Spielkonsole mit den Merkmalen des Anspruches 8.

Insbesondere schlägt die Erfindung vor, in einem spielerischen Umfeld reale Daten mit virtuellen Daten zu verknüpfen, um zum Beispiel den realen Raum nutzbar zu gestalten als einen zumindest teilweise virtuellen Multi-User Dungeon oder um die reale Umgebung bzw. einen Mitspieler in solch einer Weise zu verfremden, dass eine Anpassung auf das gewählte Spielszenario möglich ist. Um die Wahrnehmung des Benutzers durch virtuelle Daten minimal oder stark zu verfremden oder vollständig zu ersetzen, schlägt die Erfindung ein Verfahren zur Ortung eines Gegenstandes, einer Person und/oder eines Teiles davon durch einen Benutzer vor, welches die Schritte umfasst: Bestimmen der Position des Gegenstandes, der Person und/oder eines Teiles davon in einem ortsfesten Bezugssystem; Bestimmen der Position und Blickrichtung des Benutzers, um ein zweites Bezugssystem zu definieren; Berechnen von Koordinaten der ersten Position in dem zweiten Bezugssystem; und Visualieren der Koordinaten in dem zweiten Bezugssystem für den Benutzer. Durch diese Merkmalskombination können dem Benutzer zusätzliche oder auch verfremdete Wahrnehmungen von Gegenständen und/oder Personen der realen Umgebung vorgetäuscht werden. Lediglich beispielhaft ist es somit möglich, in einem ersten Schritt einen Raum, in dem das Spiel stattfinden soll, zu erfassen und den erfassten Gegenständen verfremdete Eigenschaften zuzuweisen. Beispielhaft könnte die Position eines sich in dem Raum befindenden Sessels erfasst werden, so dass dieser in dem zweiten Bezugssystem später als ein Fels oder auch ein Thron dargestellt werden kann.

Eine weitere Möglichkeit des erfindungsgemäßen Verfahrens ist in der Markierung oder Kennzeichnung von Personen zu sehen. So könnte beispielsweise in einer Menschenmenge ein Mitspieler identifiziert werden, nachdem dessen Position bekannt ist und sein Aufenthaltsort für den Benutzer zum Beispiel durch Einfärbung visualisiert werden kann.

Vorteilhafterweise werden die vorgenannten Schritte wiederholt, sobald sich zumindest eine der bestimmten Positionen und/oder Blickrichtungen um ein vorbestimmtes Ausmaß geändert hat. Wenn sich also der Benutzer in dem Raum, in dem das Spiel stattfindet, bewegt und sich somit das zweite Bezugssystem verändert, so muss die Position und Blickrichtung des Benutzers erneut bestimmt werden, um das zweite Bezugssystem neu zu definieren, wonach die ursprünglichen Koordinaten oder neu ermittelte Koordinaten der ersten Position in dem zweiten Bezugssystem berechnet und für den Benutzer visualisiert werden können. Eine Wiederholung der verschiedenen in Abhängigkeit von sich verändernden Positionen und/oder Blickrichtungen ermöglicht eine drastische Einsparung in der Berechnungszeit, insbesondere, wenn lediglich die sich verändernden Positionen und die damit in Verbindung stehenden Daten neu ermittelt, berechnet und visualisiert werden. Diese Technologie ist an und für sich aus dem Bereich der Videoübertragung per Internet bekannt, wurde jedoch bis dato nur in statischen Systemen verwendet.

Alternativ oder ergänzend zu der zumindest teilweisen Wiederholung der Schrittfolge werden die Schritte zumindest teilweise nach einem vorbestimmten Zeitintervall wiederholt, insbesondere in der Größenordnung von 1/26 s bis 1/100 s und zwar abhängig von der zur Verfügung stehenden Rechenleistung sowie der Informationsdatendichte. Eine Wiederholungsrate von 1/26 s entspricht der Bildwiederholungsfrequenz von Zeichentrickfilmen und erlauben somit eine für das menschliche Auge akzeptable Wahrnehmung von Bewegungen, seien diese nun real, virtuell minimal oder stark ergänzt oder vollständig virtuell. Eine Bildwiederholungsfrequenz von 1/100 s ermöglicht eine Wahrnehmung durch den Benutzer, die sich praktisch nicht von der realen Welt unterscheidet.

Bei einer bevorzugten Ausführungsform des erfindungsgemäßen Verfahrens werden die Signale zur Bestimmung von Positionen, Blickrichtung und/oder zur Visualisierung drahtlos übertragen. Somit ist es zum Beispiel möglich, entsprechende Sensoren an dem Benutzer, dem Mitspieler und/oder dem Gegenstand vorzusehen, ohne dass die Bewegungsfreiheit des Benutzers und/oder des Mitspielers durch Kabel beeinträchtigt wäre. In diesem Zusammenhang ist anzumerken, dass sowohl Nahzonenübermittlungsverfahren mittels Infrarot oder Ultraschall zum Einsatz kommen können wie auch fernzonengestützte Systeme, wie zum Beispiel satellitenbasierende Systeme wie GPS.

Vorteilhafterweise wird während des Schrittes des Visualisierens die Wahrnehmung durch den Benutzer virtuell ergänzt oder ersetzt, wobei für den Fall einer vollständigen Ersetzung der Wahrnehmung durch virtuelle Daten diese trotzdem auf der realen Umgebung basieren. Somit kann sich der Benutzer in einem Spieleraum bewegen unter dem Eindruck, sich zum Beispiel in einer Höhle zu befinden, ohne dass für ihn das Risiko bestehen würde, sich an Gegenständen zu stoßen, da er diese verfremdet, aber trotzdem bezüglich ihrer Größe und Position wahrnehmen kann. Im Bereich der virtuellen Ergänzung der Wahrnehmung kann es sich um eine sogenannte minimally augmented reality, um eine augmented reality oder auch eine virtual reality handeln.

Das erfindungsgemäße Verfahren kann besonders vorteilhaft Anwendung finden zur Darstellung eines Multi-User Dungeons für zumindest zwei Benutzer. In diesem Fall ist das erfindungsgemäße Verfahren selbstverständlich für jeden der Benutzer durchzuführen. Durch diese Anwendung können zum Beispiel Rollenspiele in einer virtuellen Umgebung sehr realitätsnah gespielt werden. Eine derartige Anwendung des erfindungsgemäßen Verfahrens könnte ebenfalls nutzbar sein für Proben von Schauspielern oder in der Filmindustrie, wo sich Schauspieler häufig schwertun, mit erst später eingeblendeten Personen zu interagieren (Blue-Sceen-Technologie). Eine alternative Anwendung könnte in der Simulation des sogenannten Gotcha-Spieles liegen. Bei diesem Spiel wird derzeit in der realen Welt ein abgegrenztes Areal gemietet, in dem die Mitspieler mit speziell präparierten Waffen Kampfsituationen simulieren, indem sie sich zum Beispiel mit Farbpatronen beschießen. Durch den Einsatz des erfindungsgemäßen Verfahrens könnten sich zwei Mitspieler in der realen Welt, zum Beispiel in einer Menschenmenge, identifizieren und versuchen, den Gegner mittels einer virtuellen Waffe zu treffen, ohne dass eine Gefährdung der anderen Personen auftreten würde.

Selbstverständlich könnte das erfindungsgemäße Verfahren auch in einer nichtspielerischen Umgebung Anwendung finden. So könnten sich zum Beispiel zwei unbekannte Personen, die sich verabredet haben, einfach darüber identifizieren, dass ihre Position mit virtuell zusätzlichen Informationen angedeutet wird. Eine entsprechende Ortung könnte zum Beispiel durch einen mitgeführten Peilsender oder auch das Mobiltelefon erfolgen.

Die Erfindung schlägt ebenfalls eine Vorrichtung vor, um Daten zu visualisieren, die die Wahrnehmung eines Benutzers unter Verwendung eines erfindungsgemäßen Verfahrens oder in einer Anwendung gemäß der Erfindung ergänzen und/oder ersetzen, wobei diese Vorrichtung erfindungsgemäß eine Einrichtung umfasst, die eine Positions- und Richtungsbestimmung bereitstellt. Hierbei kann es sich beispielhaft um einen sogenannten virtual reality-Helm handeln, der mit zumindest zwei Sendern ausgestattet ist, um sowohl eine Positions- als auch eine Richtungsbestimmung zu ermöglichen. In einer Ausführungsvariante ist es auch möglich, statt eines virtual reality-Helmes lediglich eine zumindest teilweise durchsichtige Brille vorzusehen, die die Wahrnehmung der realen Umgebung unter Einspeisung von zusätzlichen virtuellen Daten ermöglicht. In diesem Fall könnten die entsprechenden Sensoren, Sender oder Transponder an unterschiedlichen Orten integriert werden oder auch zu einer länglichen Einheit zusammengefasst sein, wodurch ebenfalls eine Positions- und Richtungsbestimmung ermöglicht ist. In jedem Fall sollten beim Einsatz von mehr als einem Sender oder Transponder Identifikationscodierungen vorgesehen sein, die es ermöglichen, die erfassten Signale eindeutig zuzuordnen.

Schließlich schlägt die Erfindung eine Spielkonsole vor mit einer Einrichtung zum Empfangen von Positions- oder Ortungssignalen, einer Einrichtung zum Berechnen von Bild- oder Videoinformationsdaten, basierend auf den empfangenen Signalen und gespeicherten Daten sowie einer Einrichtung zum Übertragen der berechneten Daten. Solch eine Spielkonsole kann beispielhaft mit einem bekannten Peilsystem ausgestattet sein, um die Positionen und Blickrichtungen in einem Nahfeld erfassen und verarbeiten zu können. Alternativ kann die Orts- und Richtungsbestimmung auch entfernt stattfinden, zum Beispiel auf dem sogenannten GPS-Standard basierend. Durch die gespeicherten Daten lassen sich verschiedenste Spielszenarien mit entsprechenden Umgebungs- und Personeneigenschaften darstellen.

Im folgenden sollen kurz unter Bezugnahme auf die beiliegenden Zeichnungen zwei Anwendungsbeispiele angegeben werden. In den Zeichnungen gilt:

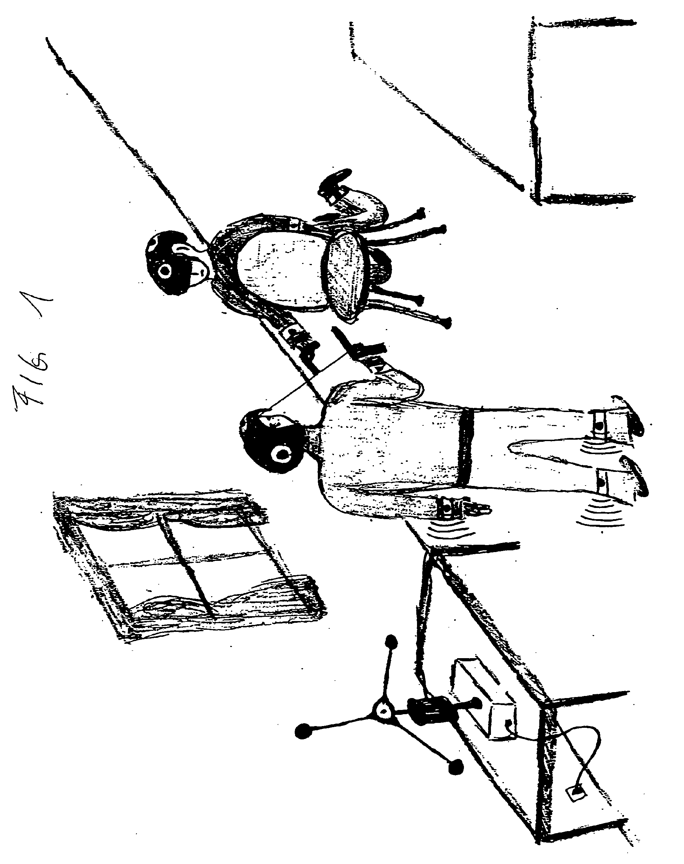

Figur 1 zeigt schematisch zwei Benutzer, die jeweils eine erfindungsgemäße Vorrichtung zur Visualisierung tragen, und zwar benachbart zu einer erfindungsgemäßen Spielkonsole.
Figur 2 zeigt die virtuell verfremdete Wahrnehmung, wie sie den Mitspielern erscheint.

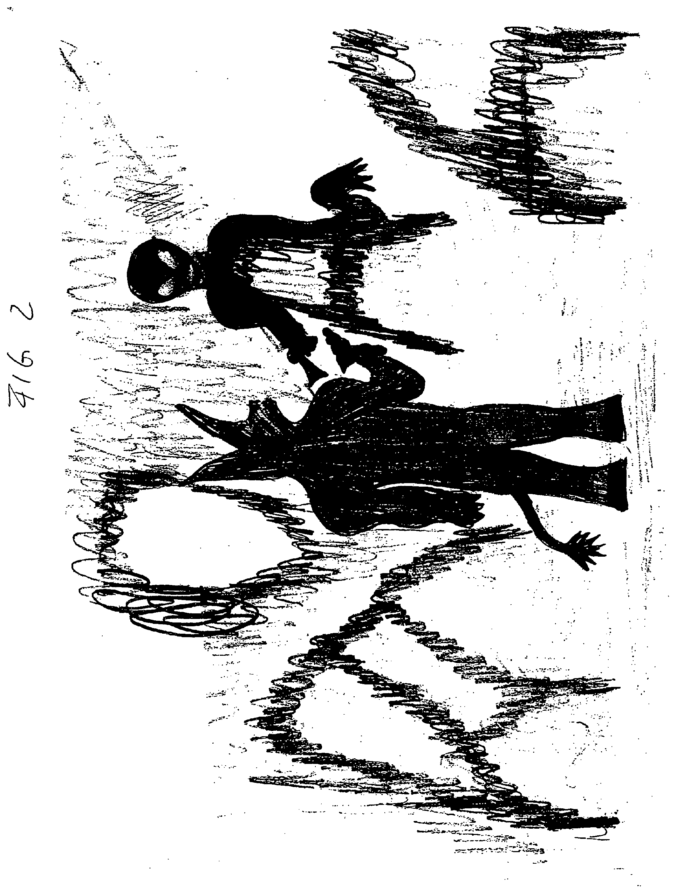

Bei einem ersten Anwendungsbeispiel soll den Mitspielern die reale Umwelt verfremdet virtuell dargestellt werden. Zu diesem Zweck wird vor Beginn des Spieles die Spielkonsole in dem in Frage stehenden Raum installiert. Anschließend wird durch die Spielkonsole der reale Raum elektronisch vermessen; es wird die Raumgeometrie, die Position und Größe von Möbelstücken etc. erfasst und in der Spielkonsole gespeichert. Die Erfassung der Raumgeometrie kann beispielhaft dadurch erfolgen, dass man an entsprechenden Positionen der Gegenstände einen Sensor anordnet. Anschließend kann die gewünschte virtuelle Verfremdung gewählt und am Spielserver oder der Spielkonsole eingestellt werden. Beispielhaft kann aus einem Zimmer mit einem Sofa etwa eine Höhle mit einem Felsblock werden. Nunmehr werden die Mitspieler mit entsprechender Sensorik versehen, um die Position derselben und die Blickrichtung erfassen zu können. Nach Zuordnung einer entsprechenden Verfremdung der wechselseitigen Wahrnehmung der Mitspieler, zum Beispiel als Außerirdischer oder dergleichen. In dem dargestellten Ausführungsbeispiel sendet die Spielkonsole ein Signal aus, welches von den Sensoren in der Art eines Transponders empfangen, codiert und wieder abgestrahlt wird, um von der Spielkonsole empfangen und ausgewertet werden zu können. Das System kann auf Lichtwellen, Ultraschall oder auch anderen elektromagnetischen Wellen basieren. Um eine exakte Blickrichtung der Mitspieler definieren zu können und somit deren jeweilige Bezugssysteme, tragen die Spieler sogenannte virtual reality-Helme mit zwei Sensoren, die durch eine Beschaffung exakt von der Spielkonsole erfasst und identifiziert werden können, zum Beispiel durch eine unterschiedliche Codierung. In der nun folgenden spielerischen Auseinandersetzung zwischen den Mitspielern wird die Wahrnehmung durch von dem Spieleserver generierten Videosignalen verfremdet, so dass beispielhaft die Mitspieler eine Wahrnehmung haben, wie sie in Figur 2 angedeutet ist, nämlich von zwei außerirdischen Wesen, die sich in einer Höhle gegenüberstehen und mit entsprechenden Waffen bedrohen.

Alternativ zu der vorangehend unter Bezugnahme auf die Zeichnungen beschriebenen Ausführungsform ist es auch möglich, einen sogenannten Multi-User Dungeon darzustellen, um mittels einer minimally augmented reality spielbaren Version des Gotcha-Spieles oder andere MUD-ähnlicher Spiele bereitzustellen. Jeder Spieler benötigt ein mobiles Gerät, welches eine Ortung, Peilung oder dergleichen ermöglicht, wodurch es einer Spielkonsole, die auch entfernt vorgesehen sein kann, ermöglicht ist, die Position und Blickrichtung jedes Mitspielers zu bestimmen. Bei der hier beschriebenen Ausführungsvariante werden lediglich Einfärbungen auf einer halbdurchsichtigen Brille an den Stellen vorgenommen, die der entsprechenden Position des Gegenspielers entsprechen. Somit kann durch eine minimally augmented reality ein Mitspieler durch eine entsprechende Einfärbung von Nichtmitspielern unterschieden werden. Unter Einsatz einer virtuellen Waffe kann somit auch zum Beispiel auf öffentlich zugänglichen Plätzen das Gotcha-Spiel simuliert werden, wobei auch eine Mannschaftsbildung ermöglicht ist, da zum Beispiel durch unterschiedliche Einfärbung Feind und Freund unterschieden werden können.

Obwohl die vorliegende Erfindung vorangehend vollständig und beispielhaft unter Bezugnahme auf derzeitige Anwendungsmöglichkeiten beschrieben wurde, sollte der Fachmann erkennen, dass verschiedenste Veränderungen und Modifikationen im Rahmen der Ansprüche möglich sind. Wesentlich ist, dass für jeden Benutzer ein von seiner Position und Blickrichtung abhängiges Bezugssystem genutzt wird, um in diesem Bezugssystem zusätzliche virtuelle Informationen bereitzustellen. Ferner sollte erkannt werden, dass die Erfindung ebenfalls Anwendung finden kann, um zum Beispiel einen verlorengegangenen Gegenstand wiederzufinden. Beispielhaft wäre es möglich, einen Schlüsselbund mit einem Peilsender zu versehen, so dass beim Blick durch eine erfindungsgemäße Visualisierungsvorrichtung der suchende Besitzer diesen sofort wiederfinden kann, da ihm die Position zu jedem Zeitpunkt in seinem Bezugssystem, welches seiner Wahrnehmung entspricht, dargestellt werden kann.

## Patentansprüche

1. Verfahren zur Ortung eines Gegenstandes, einer Person und/oder eines Teiles davon durch einen Benutzer, mit den Schritten:
a) Bestimmen der Position des Gegenstandes, der Person und/oder des Teiles von in einem ortsfesten Bezugssystem;
b) Bestimmen der Position und Blickrichtung des Benutzers, um ein zweites Bezugssystem zu definieren;
c) Berechnen von Koordinaten der ersten Position in dem zweiten Bezugssystem; und
d) Visualisieren der Koordinaten in dem zweiten Bezugssystem für den Benutzer.

2. Verfahren nach Anspruch 1, bei welchem die Schritte a) bis d) zumindest teilweise wiederholt werden, sobald sich zumindest eine der bestimmten Positionen und/oder Blickrichtungen um ein vorbestimmtes Ausmaß geändert hat.

3. Verfahren nach Anspruch 1 oder 2, bei welchem die Schritte zumindest teilweise nach einem vorbestimmten Zeitintervall wiederholt werden, insbesondere in der Größenordnung von 1/26 s bis 1/100 s.

4. Verfahren nach einem der vorangegangenen Ansprüche, bei welchem Signale zur Bestimmung von Position, Blickrichtung und/oder zur Visualisierung drahtlos übertragen werden.

5. Verfahren nach einem der vorangegangenen Schritte, bei welchem der Schritt des Visualisierens, die Wahrnehmung durch den Benutzer virtuell ergänzt oder ersetzt wird.

6. Anwendung eines Verfahrens nach einem der vorangegangenen Ansprüche durch zumindest zwei Benutzer zur Darstellung eines Rollenspieles oder Multi-User Dungeons.

7. Vorrichtung zur Visualisierung von Daten, die die Wahrnehmung eines Benutzers ergänzen oder ersetzen, mit einer Einrichtung, die eine Positions- und Richtungsbestimmung bereitstellt, verwendbar in einem Verfahren nach einem der Ansprüche 1 bis 5 oder einer Anwendung nach Anspruch 6.

8. Spielkonsole mit einer Einrichtung zum Empfangen von Positions- oder Ortungssignalen, einer Einrichtung zum Berechnen von Bild- oder Videoinformationsdaten, basierend auf den empfangenen Signalen und gespeicherten Daten, sowie eine Einrichtung zum Übertragen der berechneten Daten.
